# EUROPEAN PATENT APPLICATION

(11) **EP 2 418 620 A1**
(43) Date of publication of application: **15.02.2012**
(21) Application number: 11176670.5
(22) Date of filing: 05.08.2011
(51) Int. Cl.: G06Q 50/00, G06Q 10/00

(54) **Method and system for maintenance optimization**

(30) Priority: 13.08.2010 US 856315
(71) Applicant: General Electric Company, Schenectady, NY 12345 (US)
(72) Inventor: Higginbotham, Christopher, Minden, NV Nevada 89423 (US); Williams, Scott, Minden, NV Nevada 89423 (US)
(74) Representative: Gray, Thomas

(57) **Abstract**

A system (100) for monitoring operation of a plurality of devices is provided. The system includes a sub-system (102) configured to monitor the plurality of devices. The sub-system includes a memory for storing a computational model, and one or more processors (130) are programmed to receive, from each of the plurality of devices, a signal representative of a parameter indicative of a current condition of a respective device, compare each of the parameters to a computational model, determine, for each of a plurality of time periods, a probability each of the plurality of devices may fail based on the comparing, and schedule maintenance if a quantity of the plurality of devices likely to fail in one of the plurality of time periods exceeds a quantity threshold level.

## Description

### BACKGROUND OF THE INVENTION

The subject matter disclosed herein relates generally to a system and method for monitoring an operation of a wind farm and, more specifically, for optimizing maintenance of a wind farm by monitoring a plurality of wind turbines.

Wind turbines are regarded as environmentally friendly and are relatively inexpensive alternative sources of energy that use wind energy to produce electrical power. A wind turbine generally includes a wind rotor having a plurality of blades that transform wind energy into rotational motion of a drive shaft, which in turn drives an electrical generator to produce electrical power. Modern wind power generation systems typically take the form of a wind farm that includes multiple wind turbines that are operable to supply power to a transmission system that provides power to a utility grid.

Throughout the life of a wind farm, wind turbines require regular maintenance of components within each of the wind turbines. Certain components, such as a gear box on a wind turbine, may require expensive equipment (e.g., a crane) to perform maintenance thereon. However, it becomes very expensive and impractical to schedule a crane at the last minute and/or on an as needed basis to perform maintenance on just one wind turbine. As such, an ability to more accurately predict a time period when a particular number of wind turbines may fail and/or require maintenance would be a valuable tool.

### BRIEF DESCRIPTION OF THE INVENTION

In one aspect, a method for monitoring an operation of a plurality of devices is provided. The method includes receiving, from each of the plurality of devices, a signal representative of a parameter indicative of a current condition of a respective device, comparing each of the parameters to a computational model, determining, for each of a plurality of time periods, a probability each of the plurality of devices may fail based on the comparing, and scheduling maintenance if a quantity of the plurality of devices likely to fail in one of the plurality of time periods exceeds a quantity threshold level.

In a further aspect, a system for monitoring operation of a plurality of devices is provided. The system includes a sub-system configured to monitor the plurality of devices. The sub-system includes a memory for storing a computational model, and one or more processors programmed to receive, from each of the plurality of devices, a signal representative of a parameter indicative of a current condition of a respective device, compare each of the parameters to a computational model, determine, for each of a plurality of time periods, a probability each of the plurality of devices may fail based on the comparing, and schedule maintenance if a quantity of the plurality of devices likely to fail in one of the plurality of time periods exceeds a quantity threshold level.

In yet another aspect, one or more computer-readable media having computer-executable components is provided. The components include a monitoring component that when executed by at least one processor causes the processor to receive, from each of a plurality of devices, a signal representative of a parameter indicative of a current condition of a respective device, a status component that when executed by at least one processor causes the processor to compare each of the received parameters to a computational model, a probability component that when executed by at least one processor causes the processor to determine, for each of a plurality of time periods, a probability each of the plurality of devices may fail based on the comparing, and a scheduling component that when executed by at least one processor causes the processor to schedule maintenance if a quantity of the plurality of devices likely to fail in one of the plurality of time periods exceeds a quantity threshold level.

### BRIEF DESCRIPTION OF THE DRAWINGS

Figure 1 is a block diagram of an exemplary system for use in monitoring operation of a wind farm.
Figure 2 is an exemplary block diagram of a sub-system that may be used with the system shown in Figure 1.
Figure 3 is a flow diagram of an exemplary method for monitoring operation of a wind farm to optimize maintenance.

### DETAILED DESCRIPTION OF THE INVENTION

The present disclosure provides a system and methods for monitoring an operation of a plurality of devices. In one embodiment, a sub-system monitors a current condition of a plurality of devices (e.g., wind turbines). In certain embodiments, the sub-system is operable to receive information regarding a current condition from a monitoring component on each of the plurality of devices. Further, the sub-system is operable to determine, for each of a plurality of time periods, a probability each of the plurality of devices may fail.

In one embodiment, a computational analysis of historical data is stored and is used to generate computational models (e.g., a statistical model or a neural model) for each of the devices being monitored. Such computation models are based on a probability of a failure occurring during the life of each of the devices. Current data of each device provides a current status of each component therein and such data is compared to a corresponding computational model. Based on the comparisons, a probability each of the plurality of devices may fail may be determined. Therefore, with knowledge that a group of devices is likely to need maintenance at a future period of time that requires, for example, an expensive or specific piece of equipment, such as a crane to perform the maintenance, maintenance and/or any necessary equipment can be ordered in advance. Further, cost parameters associated with each device can be used to generate an economic model that illustrates expenses incurred for maintaining each device. Such economic models, if accuracy developed, can be used to provide an estimation of how maintenance expenses change over the life of each device.

Although the present disclosure is described with reference to specific examples related to wind turbines, which are intended to be illustrative only and not to be limiting of the present disclosure, it will be apparent to those of ordinary skill in the art that changes, additions or deletions may be made to the disclosed embodiments without departing from the spirit and scope of the present disclosure. For example, the present disclosure could be used with other power generation systems, such as but not limited to, solar energy blades, hydroelectric plants, fuel cells, and/or battery cells and any other system that monitors a plurality of devices.

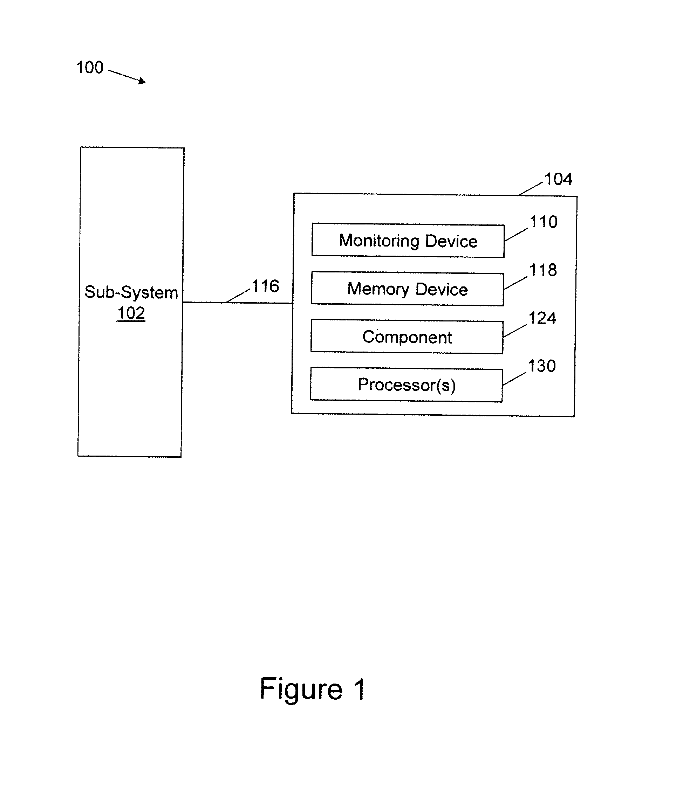

Referring to Figure 1, an exemplary operating environment is shown and designated generally as power system 100. Power system 100 is but one example of a suitable environment and is not intended to suggest any limitation as to the scope of use, or functionality of the present disclosure. Further, power system 100 should not be interpreted as having any dependency or requirement relating to any one, or combination of components illustrated herein.

In the exemplary embodiment, power system 100 includes a sub-system 102 that is configured to communicate with wind turbines 104 in power system 100 via communication link 116, which may be implemented in hardware and/or software. In one embodiment, communication link 116 remotely communicate data signals to and from sub-system 102 in accordance with any wired or wireless communication protocol known to one of ordinary skill in the art. Such data signals may include one or more signals indicative of the current conditions of at least one component associated with each wind turbine 104. The current conditions of the components are transmitted to sub-system 102 and various command signals may also be communicated by sub-system 102 to each wind turbine 104.

In the exemplary embodiment, each wind turbine 104 includes at least one monitoring device 110. Moreover, in the exemplary embodiment, monitoring device 110 monitors and communicates current condition data of at least one component associated with each wind turbine 104 such as, component 124. Component 124 may include, but is not limited to only including, one or more gear boxes, a main bearing, or an inboard or outboard bearing. Current condition data transmitted from monitoring device 110 provides the current condition status of component 124 as well as a current condition status of a respective wind turbine. The current condition data is thereafter compared to a computational analysis of historical data stored in a memory area of sub-system 102. The historical data is used to generate computational models for component 124. Such models are based on a probability of a failure occurring during a life of each wind turbine 104, and more specifically, during a life of component 124. In one embodiment, each wind turbine 104 includes a memory device 118. Memory device 118 stores temporal data associated with current data conditions of component 124.

Each wind turbine 104 also includes one or more processors 130. Processor(s) 130 are in communication with component 124 to receive and store current condition data. Processor(s) 130 may also be utilized to compute temporal averages of environmental conditions, such as, vibration data, wind speed and/or temperature. In one embodiment, to determine wear and tear on various components, the temporal averages include rolling averages of environmental conditions for one or more moving time windows of different durations. For example, rolling averages may be computed for moving time windows of 10 minutes, 30 seconds, 3 seconds, or even days.

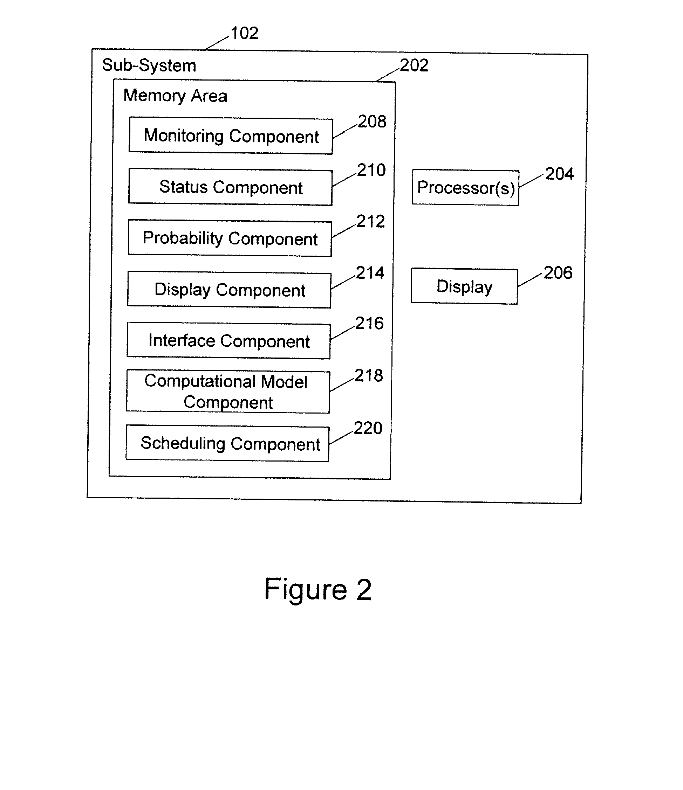

Figure 2 illustrates a block diagram of a sub-system that may be used with power system 100 shown in Figure 1. Specifically, an exemplary block diagram 200 of sub-system 102, having a memory area 202 storing components for monitoring an operation of power system 100, is shown. Sub-system 102 may include a variety of computer-readable media. By way of example, and not limitation, computer-readable media may include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices, carrier wave or any other medium that can be used to encode desired information and is accessible via sub-system 102.

Sub-system 102 also includes a display 206 and at least one processor 204 that reads data from various entities, such as from memory 202. Display 206 may be, for example, a capacitive touch screen display or other suitable display device. Further, display 206 may be separate from sub-system 102 and communicatively coupled to sub-system 102 via, for example, the Internet. User input functionality is provided in display 206, which acts as a user input selection device. Moreover, display 206 is responsive to a user applying contact on display 206 to selectively perform functionality. Display 206 may also include a keypad which operates in a conventional manner. Thus, a user can operate desired functions available with sub-system 102 by contacting a surface of display 206.

Memory area 202 also stores one or more computer-executable components. Exemplary computer-executable components include, without limitation, at least one of a monitoring component 208, a status component 210, a probability component 212, a display component 214, an interface component 216, a computational model component 218, and a scheduling component 220. While the components are shown as stored in memory area 202, the components may be stored and/or executed from a memory area that is remote from sub-system 102. For example, the components may be stored by a cloud service, and the output of the execution of the components may be provided to sub-system 102. Such embodiments facilitate reducing the computational and storage burden on sub-system 102.

In one embodiment, processor 204 executes computer-executable instructions for implementing aspects described herein. For example, monitoring component 208 may be executed by processor 204. In such an example, processor 204 receives one or more signals or accesses information corresponding to one or more parameters that are indicative of a current condition of each wind turbine 104 and/or of component 124. Processor 204 may be in communication with processor(s) 130, memory device 118, monitoring device 110, as well as pitch control systems, torque control systems, and/or power control systems in each wind turbine 104. As such, processor 204 may be configured to alter an operational state of a wind turbine based on signals received regarding a current condition of component 124. For example, if it is determined that a component has failed, a shutdown operation may be transmitted by processor 204 to a wind turbine associated with the failed component.

After a signal representative of one or more parameters indicative of a current condition of each wind turbine 104 and/or of component 124 is received, status component 210 causes processor 204 to compare the current condition of each wind turbine 104 and/or of component 124 to a computational model provided by computational model component 218. In one embodiment, a computational model is based on a probability of a failure occurring during a life of a component, for example, component 124. Next, probability component 212 causes processor 204 to determine, for each of a plurality of time periods, a probability each wind turbine 104 may fail based on the comparing of status component 210. In one embodiment, probability component 212 determines whether the compared current condition is above or below a predefined threshold level. For example, a computational model may include threshold levels associated with acceptable parameter levels of component 124. Therefore, the computational model may include parameter information indicative of acceptable parameter levels throughout a time period, for example, minutes, hours, days, weeks, years, or even a life of a wind turbine or a component within a wind turbine. The parameter information may indicate an acceptable range of parameters a component may include in order for a component to work properly during the time period. The acceptable range of parameters may be static throughout the time period, or dynamically change based on, for example, use and age. Therefore, if after comparing, in one embodiment, processor 204 determines that a parameter of component 124 is above or below an acceptable range, for example, above or below a threshold level, interface component 216 may cause processor 204 to transmit a maintenance request indicating that the current condition of component 124 is above or below the threshold level. Further, where more than one component are being monitored/compared in each wind turbine 104, each component is compared to respective threshold levels, and thereafter, a probability of failure for all of the components in each wind turbine 104 is determined. In addition, a probability of failure for an entire wind farm may also be determined. In this embodiment, a probability of failure of each wind turbine in a wind farm is determined, and using a combination of these results, a probability of failure for the entire wind farm may be determined. Factors that may be considered when determined a probability of failure of an entire wind farm may be, for example, a quantity of individual wind turbines that are likely to fail within a time period, a level of failure of each wind turbine (e.g., how serious is the problem causing the failure?), an importance level of each wind turbine that is likely to fail (e.g., a wind turbine that is relied on heavily, or at least on a more frequent basis may be considered a "high" level wind turbine, whereas a wind turbine that may only be relied on as back up or on a case by case basis may be considered a "low" level wind turbine).

Display component 214 causes processor 204 to provide monitored current conditions corresponding to component 124 for display, for example, on display 206. In particular, display component 214 provides a current condition of component 124 as well as information provided by computational model component 218. In one embodiment, display component 214 provides, for display, the received parameters of component 124 as compared to the threshold levels in the computational model. In a further embodiment, display component 214 may provide data to a separate system in addition to, or in place of providing data for display on display 206.

Scheduling component 220 causes processor 204 to schedule maintenance if a quantity of wind turbines 104 likely to fail in one of the plurality of time periods exceeds a quantity threshold level. In one embodiment, scheduling component 220 recommend a maintenance schedule to a user though, for example, display 206. In a further embodiment, to account for limited or no historical data and/or computational analysis, as a secondary consideration, a user may utilize the provided information to determine/revise the scheduling of maintenance for each wind turbine 104. For example, a user may compare the current condition of component 124 to the computational model provided by computational model component 218, and based on the user's knowledge/experience, the user may provide/revise a maintenance schedule.

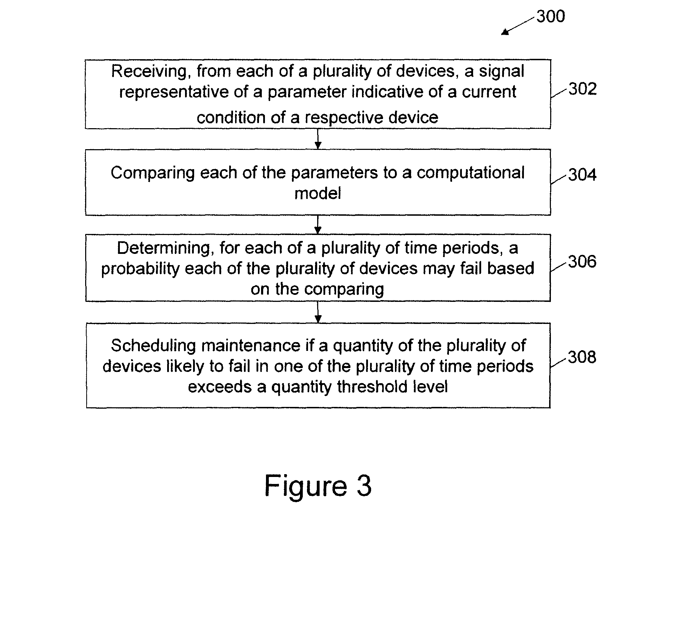

Figure 3 illustrates a flow diagram 300 of an exemplary method for use in monitoring an operation of wind turbines 104 (shown in Figure 1) that include at least one component. Initially, signals representative of parameters indicative of a current condition of component 124 (as shown in Figure 1) included in each wind turbine 104, are received 302 by monitoring component 208. A transmission of and/or the accessing of the parameters may be executed in real time, in time intervals, and/or upon a request from a user. Each of the parameters is compared 304 to a computational model and a table of threshold levels. For example, after a parameter is received by sub-system 102, the parameter is compared 304 to a computational model and one or more threshold levels stored in memory area 202 that correspond to the parameter. In one embodiment, a threshold level of a parameter may be categorized by a range, such as, high, medium, or low. A user may define conditions that fall within each category, or the conditions in each category may be pre-set by a manufacturer and/or a user. For example, a computational model may include threshold levels associated with acceptable parameter levels of component 124. Therefore, a computational model may have parameter information that is indicative of acceptable parameter levels throughout a life of a component. The acceptable parameter information may indicate an acceptable range of parameters a component may include in order for a component to work properly during a life of the component. The acceptable range of parameters may be static throughout the life of the component, or dynamically change based on, for example, use and age. In one embodiment, each of the parameters is then compared to a corresponding computational model. Thereafter, if upon comparing, processor 204 determines that a parameter of component 124 is above or below an acceptable range, for example, above or below a threshold level. In one embodiment, interface component 216 may cause processor 204 to transmit a maintenance request indicating that a parameter of component 124 is above or below an acceptable threshold level.

Sub-system 102 then determines 306, for each of a plurality of time periods, a probability each wind turbine 104 may fail based on the comparing. For example, sub-system 102 utilizes a difference between the received parameters and the information within a computational model (e.g., the threshold levels) to provide a probability for a given time period that each wind turbine 104, or more specifically, a component (e.g., component 124) in each wind turbine 104 will require maintenance (e.g., due to failing). Scheduling component 220 then utilizes this information to schedule 308 maintenance if a quantity of wind turbines 104 likely to fail in one of the plurality of time periods exceeds a quantity threshold level. One of ordinary skill in the art will appreciate that a time period may be a combination of a minute, an hour, a day, a week, a month, a year, or even longer. Further, a quantity threshold may be predefined by a manufacturer of wind turbines or selected by an operator. In one embodiment, a calendar is presented to a user with information indicating a probability that wind turbines may fail on each day, each week, and/or each month of a given year.

For example, in a wind farm that has 1000 wind turbines, a quantity threshold level may be 0.03 percent of a total number of wind turbines (e.g., 30 wind turbines). Thus, if 31 or more wind turbines are likely to fail in particular time period (e.g., a particular day or a particular week) maintenance is scheduled on or before that time period. Continuing with the above example, on January 1, it is determined that of the 1000 total wind turbines in the wind farm, 900 wind turbines have a 1 percent chance of failure and 100 wind turbines have a 5 percent chance of failure. Thus, on January 1, it is likely that 9 out of the 900 wind turbines having a 1 percent chance of failure may fail, and 5 out of the 100 wind turbines having a 5 percent chance of failure may fail, leaving a total of 14 wind turbines that are likely to fail on or before January 1. However, 14 wind turbines does not exceed the quantity threshold level of 30 wind turbines in this example, therefore, maintenance is not scheduled. On February 1, it is determined 900 wind turbines still have a 1 percent chance of failure, but now 60 wind turbines have a 10 percent chance of failure, and 40 wind turbines have a 40 percent chance of failure. Thus, on February 1, it is likely that 9 out of the 900 wind turbines having a 1 percent chance of failure may fail, 6 out of the 60 wind turbines having a 10 percent chance of failure may fail, and 16 out of the 40 wind turbines having a 40 percent chance of failure may fail, leaving a total of 31 wind turbines that are likely to fail on or before February 1. Thus, since 31 wind turbines exceeds the quantity threshold level of 30 wind turbines in this example, maintenance is scheduled on or before February 1.

One of ordinary skill in the art will appreciate that wind farms may include hundreds, and even thousands of wind turbines. Thus, the advantages of knowing a time period that a plurality of wind turbines in a wind farm are likely to need maintenance that requires, for example, an expensive piece of repair equipment, not only saves time and money, but also prevents multiple wind turbines from failing.

In one embodiment, before, or after scheduling maintenance for one or more wind turbines 104, a user may determine/revise the scheduling of maintenance for wind turbines 104. For example, there may be limited or no historical data and/or computational analysis available to enable scheduling component 220 to make an accurate determination. Therefore, as a secondary consideration, a user may utilize information provided by sub-system 102 and displayed on display 206 to determine/revise the scheduling of maintenance for wind turbines 104. For example, a user may compare the current condition of component 124 to a computational model, and based on the user's knowledge/experience, the user may provide/revise a maintenance schedule. Further, the user may provide/revise a maintenance schedule based on an availability of equipment required for the maintenance.

In a further embodiment, before scheduling component 220 schedules a maintenance request, sub-system 102 requests equipment availability information from an equipment supplier. In this embodiment, scheduling component 220 utilizes the equipment availability information when scheduling maintenance of wind turbines, and automatically reserves/requests the equipment on a specific date closest to a time period that includes a quantity of wind turbines 104 likely to fail exceeding a quantity threshold level.

In one embodiment, cost parameters are associated with each wind turbine 104 and/or component 124 to provide an economic model that indicates expenses incurred for maintaining each wind turbine 104 and/or component 124. Economic models are optimized across a wind farm to provide an indication of how maintenance expenses change over the life of the wind farm.

### Exemplary Operating Environment

A controller or computing device such as is described herein has one or more processors or processing units, system memory, and some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules or other data. Communication media typically embody computer readable instructions, data structures, program modules, or other data in a modulated data signal, such as a carrier wave or other transport mechanism, and include any information delivery media. Combinations of any of the above are also included within the scope of computer readable media.

The controller/computer may operate in a networked environment using logical connections to one or more remote computers, such as a remote computer. Although described in connection with an exemplary computing system environment, embodiments of the present disclosure are operational with numerous other general purpose or special purpose computing system environments or configurations. The computing system environment is not intended to suggest any limitation as to the scope of use or functionality of any aspect of the present disclosure. Moreover, the computing system environment should not be interpreted as having any dependency or requirement relating to any one or combination of components illustrated in the exemplary operating environment. Examples of well known computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the present disclosure may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the present disclosure may be implemented with any number and organization of such components or modules. For example, aspects of the present disclosure are not limited to the specific computer-executable instructions or the specific components or modules illustrated in the figures and described herein. Other embodiments of the present disclosure may include different computer-executable instructions or components having more or less functionality than illustrated and described herein. Aspects of the present disclosure may also be practiced in distributed computing environments where tasks are performed by remote processing devices that are linked through a communications network. In a distributed computing environment, program modules may be located in both local and remote computer storage media including memory storage devices.

Aspects of the present disclosure transform a general-purpose computer into a special-purpose computing device when configured to execute the instructions described herein.

The order of execution or performance of the operations in embodiments of the present disclosure illustrated and described herein is not essential, unless otherwise specified. That is, the operations may be performed in any order, unless otherwise specified, and embodiments of the present disclosure may include additional or fewer operations than those disclosed herein. For example, it is contemplated that executing or performing a particular operation before, contemporaneously with, or after another operation is within the scope of aspects of the present disclosure.

When introducing elements of aspects of the present disclosure or the embodiments thereof, the articles "a," "an," "the," and "said" are intended to mean that there are one or more of the elements. The terms "comprising," "including," and "having" are intended to be inclusive and mean that there may be additional elements other than the listed elements.

Having described aspects of the present disclosure in detail, it will be apparent that modifications and variations are possible without departing from the scope of aspects of the present disclosure as defined in the appended claims. As various changes could be made in the above constructions, products, and methods without departing from the scope of aspects of the present disclosure, it is intended that all matter contained in the above description and shown in the accompanying drawings shall be interpreted as illustrative and not in a limiting sense.

This written description uses examples to disclose the claimed subject matter, including the best mode, and also to enable any person skilled in the art to practice the claimed subject matter, including making and using any devices or systems and performing any incorporated methods. The patentable scope of the present disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for monitoring an operation of a plurality of devices, the method comprising:
   receiving, from each of the plurality of devices, a signal representative of a parameter indicative of a current condition of a respective device;
   comparing each of the parameters to a computational model;
   determining, for each of a plurality of time periods, a probability each of the plurality of devices may fail based on the comparing; and
   scheduling maintenance if a quantity of the plurality of devices likely to fail in one of the plurality of time periods exceeds a quantity threshold level.
2. A method in accordance with Clause 1, further comprising determining whether the compared parameters are above or below a parameter threshold level.
3. A method in accordance with Clause 2, wherein the computational model includes threshold levels based on historical data.
4. A method in accordance with Clause 1, further comprising:
   providing, for display, one or more of the plurality of time periods; and
   providing, for display, a visual identification of a quantity of the plurality of devices likely to fail in one or more of the plurality of time periods.
5. A method in accordance with Clause 1, wherein a time period is one or more of the following: a minute, an hour, a day, a week, a month, and a year.
6. A method in accordance with Clause 1, further comprising determining, for a system including each of the plurality of devices, a probability the system may fail based on the probability each of the plurality of devices in the system may fail.
7. A method in accordance with Clause 1, further comprising providing, for display, a current condition of one or more of the plurality of devices.
8. A method in accordance with Clause 1, further comprising scheduling equipment required for the scheduled maintenance.
9. A system for monitoring operation of a plurality of devices, said system comprising:
   a sub-system configured to monitor the plurality of devices, the sub-system comprising:
      a memory for storing a computational model; and
      one or more processors programmed to:
   receive, from each of the plurality of devices, a signal representative of a parameter indicative of a current condition of a respective device;
   compare each of the parameters to a computational model;
   determine, for each of a plurality of time periods, a probability each of the plurality of devices may fail based on the comparing; and
   schedule maintenance if a quantity of the plurality of devices likely to fail in one of the plurality of time periods exceeds a quantity threshold level.
10. A system in accordance with Clause 9, further comprising a display device for displaying a current condition of one or more of the plurality of devices.
11. A system in accordance with Clause 9, wherein said processor is further programmed to determine whether the compared parameters are above or below a predefined threshold level.
12. A system in accordance with Clause 11, wherein the computational model comprises threshold levels based on historical data.
13. A system in accordance with Clause 9, wherein said processor is further programmed to schedule equipment required for the scheduled maintenance.
14. A system in accordance with Clause 9, wherein the quantity threshold is a predefined percentage of the plurality of devices.
15. A system in accordance with Clause 9, wherein said processor is further programmed to:
   provide, for display, one or more of the plurality of time periods; and
   provide, for display, a visual identification of a quantity of the plurality of devices likely to fail in the one or more of the plurality of time periods.
16. One or more computer-readable storage media having computer-executable components, said components comprising:
   a monitoring component that when executed by at least one processor causes the processor to receive, from each of a plurality of devices, a signal representative of a parameter indicative of a current condition of a respective device;
   a status component that when executed by at least one processor causes the processor to compare each of the received parameters to a computational model;
   a probability component that when executed by at least one processor causes the processor to determine, for each of a plurality of time periods, a probability each of the plurality of devices may fail based on the comparing; and
   a scheduling component that when executed by at least one processor causes the processor to schedule maintenance if a quantity of the plurality of devices likely to fail in one of the plurality of time periods exceeds a quantity threshold level.
17. One or more computer-readable media in accordance with Clause 16, further comprising a display component that when executed by the processor causes the processor to provide, for display, a current condition of each component.
18. One or more computer-readable media in accordance with Clause 16, wherein execution of the display component by the processor further causes the processor to provide, for display, one or more of the plurality of time periods, and to provide, for display, a visual identification of a quantity of the plurality of devices likely to fail in one or more of the plurality of time periods.
19. One or more computer-readable media in accordance with Clause 16, further comprising an interface component that when executed by at least one processor causes the processor to transmit a maintenance request indicating that a quantity of the plurality of devices likely to fail in one of the plurality of time periods exceeds a quantity threshold level.
20. One or more computer-readable media in accordance with Clause 19, wherein execution of the scheduling component by the processor further causes the processor to schedule equipment required for the scheduled maintenance.

## Claims

1. A system (100) for monitoring operation of a plurality of devices, said system comprising:
a sub-system (102) configured to monitor the plurality of devices, the sub-system comprising:
a memory for storing a computational model; and
one or more processors (130) programmed to:
receive, from each of the plurality of devices, a signal representative of a parameter indicative of a current condition of a respective device;
compare each of the parameters to a computational model;
determine, for each of a plurality of time periods, a probability each of the plurality of devices may fail based on the comparing; and
schedule maintenance if a quantity of the plurality of devices likely to fail in one of the plurality of time periods exceeds a quantity threshold level.

2. A system (100) in accordance with Claim 1, further comprising a display device for displaying a current condition of one or more of the plurality of devices.

3. A system (100) in accordance with Claim 1 or 2, wherein said processor (130) is further programmed to determine whether the compared parameters are above or below a predefined threshold level.

4. A system (100) in accordance with Claim 3, wherein the computational model comprises threshold levels based on historical data.

5. A system (100) in accordance with any one of the preceding Claims, wherein said processor is further programmed to schedule equipment required for the scheduled maintenance.

6. A system (100) in accordance with any one of the preceding Claims, wherein the quantity threshold is a predefined percentage of the plurality of devices.

7. A system (100) in accordance with any one of the preceding Claims, wherein said processor (130) is further programmed to:
provide, for display, one or more of the plurality of time periods; and
provide, for display, a visual identification of a quantity of the plurality of devices likely to fail in the one or more of the plurality of time periods.

8. One or more computer-readable storage media having computer-executable components, said components comprising:
a monitoring component (208) that when executed by at least one processor (130) causes the processor to receive, from each of a plurality of devices, a signal representative of a parameter indicative of a current condition of a respective device;
a status component (210) that when executed by at least one processor causes the processor to compare each of the received parameters to a computational model;
a probability component (212) that when executed by at least one processor causes the processor to determine, for each of a plurality of time periods, a probability each of the plurality of devices may fail based on the comparing; and
a scheduling component (220) that when executed by at least one processor causes the processor to schedule maintenance if a quantity of the plurality of devices likely to fail in one of the plurality of time periods exceeds a quantity threshold level.

9. One or more computer-readable media in accordance with Claim 8, further comprising a display component (214) that when executed by the processor (130) causes the processor to provide, for display, a current condition of each component.

10. One or more computer-readable media in accordance with Claim 8, wherein execution of the display component (214) by the processor further causes the processor (130) to provide, for display, one or more of the plurality of time periods, and to provide, for display, a visual identification of a quantity of the plurality of devices likely to fail in one or more of the plurality of time periods.

11. A method for monitoring an operation of a plurality of devices, the method comprising:
receiving, from each of the plurality of devices, a signal representative of a parameter indicative of a current condition of a respective device;
comparing each of the parameters to a computational model;
determining, for each of a plurality of time periods, a probability each of the plurality of devices may fail based on the comparing; and
scheduling maintenance if a quantity of the plurality of devices likely to fail in one of the plurality of time periods exceeds a quantity threshold level.

12. A method in accordance with Claim 11, further comprising determining whether the compared parameters are above or below a parameter threshold level.

13. A method in accordance with Claim 12, wherein the computational model includes threshold levels based on historical data.

14. A method in accordance with any of Claims 11 to 13, further comprising:
providing, for display, one or more of the plurality of time periods; and
providing, for display, a visual identification of a quantity of the plurality of devices likely to fail in one or more of the plurality of time periods.

15. A method in accordance with any of Claims 11 to 14, wherein a time period is one or more of the following: a minute, an hour, a day, a week, a month, and a year.
